# EUROPEAN PATENT APPLICATION

(11) **EP 4 693 079 A1**
(43) Date of publication of application: **11.02.2026**
(21) Application number: 24193222.7
(22) Date of filing: 06.08.2024
(51) Int. Cl.: G06F 21/14, G06F 21/53

(54) **METHOD, DATA PROCESSING APPARATUS, DATA PROCESSING SYSTEM, COMPUTER-READABLE MEDIUM AND COMPUTER PROGRAM PRODUCT FOR REVERSE-ENGINEERING-PREVENTING CONFIDENTIAL COMPUTING**

(71) Applicant: ABB SCHWEIZ AG, 5400 Baden (CH)
(72) Inventor: GAMER, Thomas, 68782 Brühl (DE); KOHNHAEUSER, Florian, 64560 Riedstadt (DE); GOETTEL, Christian, 5442 Fislisbach (CH)
(74) Representative: Maiwald GmbH

(57) **Abstract**

There is disclosed a method for protecting an application within a trusted execution environment, TEE, against reverse-engineering in industrial plants. The method comprises equipping the TEE or an interface of the TEE with at least one protection module; and directing data related to the application to go through the at least one protection module. There is further disclosed a data processing apparatus, a computer-readable medium and a computer program product.

## Description

### FIELD OF THE INVENTION

The invention relates to a method and a data processing apparatus for reverse-engineering-preventing confidential computing in industrial plants. The invention further relates to a data processing system, a computer-readable medium and a computer program product.

### BACKGROUND

Confidential computing is a concept mainly used for intellectual property (IP) protection of applications or confidentiality of data by running sensitive applications or processing sensitive data within a trusted execution environment (TEE) with isolated processing and encrypted memory. This requires dedicated hardware like ARM TrustZone for embedded, mobile and server devices or Intel SGX for server devices, for example, and can be combined with further technologies such as remote attestation. Confidential computing is primarily being used by cloud providers such as AWS, Google, IBM, and Microsoft Azure, as well as for Digital Rights Management (DRM) solutions of streaming services such as Netflix.

Such IP-protected applications might comprise algorithms or models that are business-critical for the providing party, especially in use cases where such algorithms or models are integrated into an application of a third party partner, such as a high-fidelity model (also known as the business-critical model) for failure root cause analysis being embedded into a classical operator human machine interface (HMI) by a distributed control system (DCS) vendor (also known as the third party partner).

In case confidential computing technology is used by a provider of an application in order protect sensitive applications, still the user of an application might (maliciously) try to reverse engineer such an application, for example, by feeding all reasonable inputs to the application and collecting large amounts of input/output sets to figure out how the models or algorithms of the protected application are working in detail. This would effectively circumvent the hardware-based protection by the TEE with isolated processing and encrypted memory, and subsequently, in worst case, prevent the integration by a third-party partner - and therefore, important control means for operation or troubleshooting of an industrial process.

Additionally, the user of an application might try to get the application into malfunctioning, for example, by overwhelming it with a huge number of inputs or triggering errors with specific combinations of inputs.

Hence, there is room and need for improvement regarding the protection of applications in TEEs against reverse engineering.

### SUMMARY

In view of the above, it is an object of the present disclosure to overcome at least part of the drawbacks available regarding the protection of applications in TEEs against reverse engineering.

Therefore, to address one or more of these drawbacks, there is provided, in a first aspect, a method for protecting an application within a TEE against reverse-engineering in industrial plants or in an industrial context. The method comprises equipping the TEE or an interface of the TEE with at least one protection module. The method further comprises directing data related to the application to go through a protection module of the at least one protection module.

It shall be noted that the TEE may have several interfaces, i.e. one or more input interfaces and one or more output interfaces. Not all interfaces need to be equipped with one or more protection modules. However, at least one of the input data to be input to the application and the output data to be output from the application has to go through a protection module.

It shall further be noted that equipping the TEE or the interface of the TEE with the at least one protection module is to be understood as making the at least one protection module to be part of the TEE or as providing the at least one protection module to the TEE or to the interface of the TEE, so that the at least one protection module may protect the TEE regarding input to the TEE (in particular regarding input to the application inside the TEE) and/or output from the TEE (in particular regarding output from the application inside the TEE). A protection module may be locally equipped or provided or may be remotely equipped or provided. Thus, said in other words, a protection module may be locally part of the TEE or maybe remotely part of the TEE. There may also be a combination of locally equipped, provided or applied protection modules and of remotely equipped, provided or applied protection modules. Equipping or providing may comprise that the TEE interface(s) are wrapped, i.e. the actual TEE interface(s) is not directly accessible but only through the wrapper, wherein the wrapper represents one or more protection modules that may be connected through one or more communication channels between a local TEE and a remote TEE. There is no restriction in the number of communication channels the local TEE may have with the remote TEE. There is also no restriction in the number of remote TEEs the local TEE is connected to through communication channels. Thus, the at least one protection modules may be wrapping the TEE (i.e. for example a combination of one local TEE and one or more remote TEEs) and may be located before the TEE from an input data perspective and/or may be located behind the TEE from an output data perspective. Equipping may also comprise that the at least one protection modules are provided at the TEE interface(s). For example, one or more of the at least one protection modules may be provided at an input interface of a local TEE and/or one or more of the at least one protection modules may be provided at an output interface of a remote TEE connected to the local TEE. Similarly, one or more of the at least one protection modules may be provided at an input interface of a remote TEE and/or one or more of the at least one protection modules may be provided at an output interface of a local TEE connected to the remote TEE. Equipping may also comprise that the at least one protection modules are provided inside the TEE. I.e. behind the TEE interface(s) and before the application (between TEE interface(s) and application) from an input data perspective and/or behind the application and before the TEE interface(s) (between application and TEE interface(s)) from an output data perspective. For example, the at least one protection modules may be provided inside a local TEE and/or inside one or more remote TEEs connected to the local TEE.

Further, data related to the application may comprise input data to be input to the application and/or output data to be output from the application. For example, input data may comprise any data, data stream, or pieces of data that are to be input to the application. Such data may comprise data, like numerical values, text and/or graphics for example, to be fed into an algorithm or processing model. Moreover, such data may comprise instructions to cause the application to execute one or more processing steps. Further, such data may comprise configuration data for configuring the application. Output data may be any data that is output from the application. For example, output data may comprise numerical values, text and/or graphics. It shall further be noted that "to go through the protection module" may mean that input data may only enter the application after the input data went through or passed through the protection module. Additionally or alternatively, it may mean that output data (already left the application) may only leave the TEE after the output data went through or passed through the protection module or may only leave the TEE by going through a protection module provided "behind" the TEE.

Moreover, the application may be provided at a local TEE or at a remote TEE. The application may be divided upon the local TEE and/or upon one or more remote TEE. The application may comprise at least a first application and a second application, wherein the first and second applications may be provided in different or same TEEs, for example the first and second applications may be provided in a same local TEE, in a same remote TEE, in different remote TEEs, or in a local TEE and a remote TEE.

Furthermore, a protection module may also be understood as an element, a function or a feature, with which the TEE or an interface of the TEE is equipped or which is provided to the TEE or an interface of the TEE (i.e. the TEE is modified in that the protection module is part of the TEE for example), and which may function or serve as interface protection based on using or applying predetermined rules, predetermined evaluation criteria, predetermined determination criteria and/or predetermined controlling processes for controlling, processing or handling input data to go through the interface and/or output data to go through the interface.

Moreover, it shall be noted that the application (provided within the TEE) may be provided by an application provider, being a company for example, and that the application provider, which may provide its application to application users, is interested in protecting its application, for example algorithms used and/or knowledge included in its application. Thus, according to several examples of the present disclosure, the application may be an application provided by an application provider in industrial plant or in an industrial (plant) context. Further, according to several examples of the present disclosure, the data related to the application may thus be data associated with application users, for example data provided by an application user, data inputted by an application user, or data outputted to an application user.

The method according to the first aspect is advantageous in that it may participate in enabling to protect an application within a trusted execution environment against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reasons are that it raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to several examples of the present disclosure, the interface may comprise an input interface, the at least one protection module may comprise one or more input protection modules and the data may comprise input data. Further, the equipping may comprise equipping the TEE or the input interface of the TEE with the one or more input protection modules. In addition, the directing may comprise directing the input data to go through at least one input protection module of the one or more input protection modules before going into the application. To go through at least one input protection module may be understood as to be processed by at least one input protection module.

Hence, the application is protected against malicious input data. Thus, reliability of the application and trust of users in the application is further increased.

According to several examples of the present disclosure, the interface may comprise an output interface, the at least one protection module may comprise one or more output protection modules and the data may comprise output data. The equipping may comprise equipping the TEE or the output interface of the TEE with the one or more output protection modules. In addition, the directing may comprise directing the output data from the application to be processed by at least one output protection module of the one or more output protection modules before going out of the TEE. Additionally or alternatively, the directing may comprise directing the output data from the application to go out of the TEE via at least one output protection module of the one or more output protection modules provided behind the TEE and the output data to be processed by the at least one output protection module provided behind the TEE. To be processed by at least one output protection module may be understood as to go through at least one output protection module.

Hence, output data from the TEE are protected to compromise confidentiality or IP protection and are thus protected against leakage of information usable for reverse-engineering. Thus, reliability of the application is further increased as well as the trust of the application provider in running the application on a TEE-based platform. This in turn allows a user to benefit from the application being available and executed, for example, to control an industrial process.

According to several examples of the present disclosure, the equipping may comprise equipping the TEE or the interface of the TEE with one or more protection modules. The method may further comprise applying at least one protection module from the one or more protection modules for the application. The directing may comprise directing the data related to the application to go through the applied at least one protection module.

Hence, due to the application of several protection modules, reliability and protection is further increased.

According to several examples of the present disclosure, the method may further comprise configuring the TEE with the one or more protection modules. Further, based on a result of the configuring, the method may comprise applying at least one protection module from the one or more protection modules for the application. The directing may comprise directing the data related to the application to go through the applied at least one protection module.

Hence, due to the configuring, one or more protection modules may be selected according to a specific application. Thus, applicability, reliability and protection are further increased.

According to several examples of the present disclosure, the applying may comprise applying for the application at least one of the following protection modules:
- verification of source,
- detection of steganographic attacks,
- prevention and detection of reversible computations,
- fuzzifying outputs, and
- output encryption.

The method may further comprise restricting leakage of one or more pieces of the input data based on the applied at least one of the protection modules verification of source, detection and prevention of steganographic attacks, prevention and detection of reversible computations, fuzzifying outputs, and output encryption.

It shall be noted that by verification of source, it is meant that a source of a model (i.e. a model used in the application within the TEE) should be verifiable, for example by digital signatures and remote attestation. In addition, only legitimate applications providers should be able to modify the model after deployment.

Thus, the applying may comprise applying a protection module by making a source of a model (i.e. a model used in the application within the TEE) verifiable and/or by enabling only legitimate applications providers to modify the model after deployment.

It shall further be noted that by detection of steganographic attacks, it is meant to make use of steganalysis to detect hidden leakage of inputs in outputs. Block operation if attack is detected.

Thus, the applying may comprise applying a protection module by using steganalysis to detect hidden leakage of inputs in outputs and/or by performing block operation if an attack is detected.

It shall further be noted that by prevention and detection of reversible computations, it is meant to establish a framework that by design prevents models from leaking data, for example, by restricting the capabilities and computations a model (i.e. a model used in the application within the TEE) is able to perform. An alternative approach is to analyze models and detect whether their computations can be made reversible, for example, an attacker can learn about inputs from outputs, and block such models.

Thus, the applying may comprise applying a protection module by establishing a framework that by design prevents models from leaking data, for example, by restricting the capabilities and computations a model used in the application within the TEE is able to perform. Alternatively, by analyzing models (used or to be used in the application within the TEE), detecting whether their computations can be made reversible, and, if yes, blocking such models.

It shall further be noted that by fuzzifying outputs, it is meant that instead of providing precise output values for a specific input combination, the algorithm or model (used in the application within the TEE) could provide "fuzzy outputs", for example, in the sense of being randomized within an acceptable value range around the specific value, or by adding some noise to the specific value. Such noise or randomization could also depend on other factors, such as input data rates, since a higher rate may result in higher fuzziness. A challenge with such an approach may be that, in case a receiver of the results doesn't know the results are fuzzified or to which extent they are fuzzified, this might also impact benign use of the protected algorithm or model negatively.

Thus, the applying may comprise applying a protection module by providing "fuzzy outputs", for example, in the sense of being randomized within an acceptable or predetermined value range around a specific value, or by adding noise to the specific value. Such noise or randomization could also depend on other factors, such as input data rates, since a higher rate may result in higher fuzziness.

It shall further be noted that by output encryption, it is meant that the output is encrypted in a way that only the legitimate user of the application within the TEE is able to decrypt and make sense of the output. This significantly limits the attack surface, as the attacker first needs to obtain access to the decryption key to launch a reverse-engineering attack, for example, by stealing the decryption key from a legitimate user or being the legitimate user. Both symmetric-key or public-key encryption schemes could be used. Keys for the legitimate user may be fixed and negotiated beforehand or are modifiable at runtime and require authorization by another party, for example via signatures.

Thus, the applying may comprise applying a protection module by encrypting the output in a way that only the legitimate user of the application within the TEE is able to decrypt and make sense of the output, for example by using a corresponding decryption key. For the encrypting, both symmetric-key or public-key encryption schemes may be used.

Hence, leakage of one or more pieces of input data may be avoided.

According to several examples of the present disclosure, the TEE may comprise multiple TEEs, wherein the multiple TEEs may comprise a local TEE and one or more remote TEEs, wherein the local TEE may be connected to the one or more remote TEEs by one or more communication channels, respectively.

It shall be noted that the multiple TEEs may be distributed TEEs. Further, using multiple TEEs may lead to performance benefits, for example, when load balancing operations are performed between TEEs. Using multiple TEEs may allow to offload operations from one TEE to another TEE that provides a higher level of protection.

Hence, efficiency may be increased and security may be even further improved.

According to several examples of the present disclosure, the equipping may comprise equipping the local TEE or an interface of the local TEE with the at least one protection module, and/or wherein the equipping may comprises equipping the one or more remote TEEs or one or more interfaces of the one or more remote TEEs with the at least one protection module. The interface of the local TEE may comprise an input interface and/or an output interface of the local TEE. The one or more interfaces of the one or more remote TEEs may comprise one or more input interfaces and/or one or more output interfaces of the one or more remote TEEs.

Hence, the equipping may be made in accordance with a certain structure of multiple TEEs. Thus, an individual application of suitable protection modules may be achieved.

According to several examples of the present disclosure, the application may comprise one or more application parts provided at one or more TEEs of the multiple TEEs.

It shall be noted that the application parts may also be understood as individual applications.

Hence, applications or application parts may be individually provided at separate TEEs, for example at a local TEE or at a remote TEE. Thus, a performance of the applications or application parts may be increased.

According to several examples of the present disclosure, the input protection module may be at least one of:
- input rate limiting,
- input range limiting,
- verification of source,
- verification of input frequency,
- encoding semantic filters, and
- input value blocker.

It shall be noted that by input rate limiting, it is meant that it is allowed only a specific amount of data per time interval to be sent to the TEE and processed by the algorithm of the application within the TEE. This slows down an attacker trying to feed all reasonable inputs and collecting large amounts of output information within a short time period.

Thus, the applying may comprise applying a protection module by enabling a specific or predetermined amount of data per time interval to be sent to the TEE and to be processed by the application.

It shall be noted that by input range limiting, it is meant that it is allowed only specific ranges of inputs to be sent to the TEE and processed by the algorithm of the application within the TEE. This prevents the attacker from trying the entire input range, limiting information to reasonable value ranges only. Additionally, this might avoid unwanted outputs or algorithm behavior due to inputs being outside of considered valid ranges.

Thus, the applying may comprise applying a protection module by enabling specific or predetermined ranges of inputs to be sent to the TEE and to be processed by the application.

It shall be noted that by verification of source, it is meant that it is allowed inputs only from specifically authorized sources, for example, IP addresses, users, machines, or even another attested TEE. The verification may rely on shared secrets, tokens, certificates, or even make use of advanced techniques such as remote attestation. The process of verification is to identify the source as an authorized entity.

Thus, the applying may comprise applying a protection module by restricting inputs to specific or predetermined authorized sources.

It shall be noted that by verification of input frequency, it is meant that it is allowed only a pre-specified input frequency, i.e., defining a threshold how many inputs are allowed per time-interval. The frequency limit can be applied per source, if verification of source is available (see above), or globally for inputs from all sources, or by other combinations of metrics.

Thus, the applying may comprise applying a protection module by restricting inputs to a specified or predetermined upper threshold input frequency, for example by defining an upper threshold of how many inputs are allowed per time-interval.

It shall be noted that by encoding semantic filters, it is meant to filter known sensitive input combinations before feeding them into the algorithm of the application within the TEE. Such input combinations might, for instance, be known to provide very specific insights into the model or algorithm or even able to extract sensitive model features or parameters.

Thus, the applying may comprise applying a protection module by filtering predetermined input combinations before feeding them into the application.

It shall be noted that by input value blocker, it is meant that there might be specific inputs that might raise errors or lead to unanticipated or uncontrolled behavior of the algorithm of the application within the TEE. Such input values need to be blocked from reaching the algorithm or model, to avoid unwanted malfunctioning or data leakage.

Thus, the applying may comprise applying a protection module by blocking specific or predetermined inputs from being input to the application.

Hence, malicious input data may be avoided efficiently and most appropriately for any specific application.

According to several examples of the present disclosure, the output protection module may be at least one of:
- output rate limiting,
- output range limiting,
- fuzzifying outputs, and
- output encryption.

It shall be noted that by output rate limiting, it is meant, similar to the input protection modules, that a rate of output values might be limited to a specific time interval, to avoid extensive information gain by just observing results with a huge number of input combinations.

Thus, the applying may comprise applying a protection module by limiting a rate of output values to a predetermined time interval.

It shall be noted that by output range limiting, it is meant to, similar to the input protection modules, that a range of output values might be limited to a specific value range, to avoid extensive information gain by just observing results with a huge number of input combinations.

Thus, the applying may comprise applying a protection module by limiting a range of output values to a predetermined value range.

It shall further be noted that by fuzzifying outputs, it is meant that instead of providing precise output values for a specific input combination, the algorithm or model (used in the application within the TEE) could provide "fuzzy outputs", for example, in the sense of being randomized within an acceptable value range around the specific value, or by adding some noise to the specific value. Such noise or randomization could also depend on other factors, such as input data rates, since a higher rate may result in higher fuzziness. A challenge with such an approach may be that, in case a receiver of the results doesn't know the results are fuzzified or to which extent they are fuzzified, this might also impact benign use of the protected algorithm or model negatively.

Thus, the applying may comprise applying a protection module by providing "fuzzy outputs", for example, in the sense of being randomized within an acceptable or predetermined value range around a specific value, or by adding noise to the specific value. Such noise or randomization could also depend on other factors, such as input data rates since a higher rate may result in higher fuzziness.

It shall further be noted that by output encryption, it is meant that the output is encrypted in a way that only the legitimate user of the application within the TEE is able to decrypt and make sense of the output. This significantly limits the attack surface, as the attacker first needs to get access to the decryption key to launch a reverse-engineering attack, for example, by stealing the decryption key from a legitimate user or being the legitimate user. Both symmetric-key or public-key encryption schemes could be used. Keys for the legitimate user may be fixed and negotiated beforehand or are modifiable at runtime and require authorization by another party, for example via signatures.

Thus, the applying may comprise applying a protection module by encrypting the output in a way that only the legitimate user of the application within the TEE is able to decrypt and make sense of the output, for example by using a corresponding decryption key. For the encrypting, both symmetric-key or public-key encryption schemes may be used.

Hence, increased protection of confidentiality or IP protection may be achieved more efficiently and most appropriately for any specific application.

According to a second aspect, there is provided a data processing apparatus for protecting an application within a TEE against reverse-engineering in industrial plants, the data processing apparatus comprising a processor being configured to carry out the method of the first aspect.

The data processing apparatus according to the second aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reason is that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to a third aspect, there is provided a data processing system for protecting an application within a TEE against reverse-engineering in industrial context. The data processing system comprising a data processing apparatus of the second aspect. Additionally or alternatively, the data processing system comprises means for carrying out the method of the first aspect.

The data processing system according to the third aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reason is that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to a fourth aspect, there is provided an industrial plant comprising a data processing apparatus of the second aspect and/or a data processing system of the third aspect.

By "industrial plant", according to several examples, it may be meant an industrial plant, industrial production plant or industrial resource plant like a mine for example, comprising one or more pipelines, production lines and/or assembly lines for transforming one or more educts into a product and/or for assembling one or more components into a final product for example. According to several examples, it may be meant an industrial plant in which data from third parties are processed for processing the transforming and/or the assembling. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reasons are that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reasons are that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage are prevented since a gain of knowledge to be obtained from models and/or algorithms used in the application based on reverse engineering efforts gets significantly harder. The reasons are that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

According to a seventh aspect, there is provided a use of at least one of a data processing apparatus of the second aspect, and/or of a data processing system of the third aspect, and/or of an industrial plant of the fourth aspect, and/or of a computer-readable medium of the fifth aspect, and/or of a computer program product of the sixth aspect.

The use according to the seventh aspect is advantageous in that it may participate in enabling to protect an application within a TEE against reverse-engineering in industrial plants. Moreover, it is enabled to reliably prevent statistical reverse engineering of confidential algorithm code, since there is raised difficulty for dynamic reverse engineering of confidential algorithm code. Moreover, advanced threats for IP leakage is prevented since a gain of knowledge to be obtained from models and/or algorithms used in the application based on reverse engineering efforts gets significantly harder. The reason is that it is raised a bar for maliciously reverse engineering those third-party models with an additional protection element for the TEE. Furthermore, it is enabled to offer additional services, like for example integrated root cause analysis based on a third-party high-fidelity model, while raising the bar for maliciously reverse engineering those third-party models with an additional protection element for the TEE.

Optional features of the first aspect may form part of any of the second to seventh aspects, mutatis mutandis.

The method of the first aspect may be at least in parts computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a schematic drawing of an application protected by a TEE plus additional protection modules at an input interface and an output interface to further harden against reverse-engineering according to several examples of the present disclosure;
- Figure 2 is based on Figure 1 and illustrates a schematic drawing showing the application of multiple TEEs, according to several examples of the present disclosure;
- Figure 3 is based on Figure 2 and illustrates a schematic drawing showing the application of multiple TEEs, according to several examples of the present disclosure;
- Figures 4a, 4b and 4c schematically illustrate a local TEE, an intermediate TEE and a remote TEE, respectively, as shown in Figure 3;
- Figure 5 illustrates a flowchart indicative of a method according to several examples of the present disclosure; and
- Figure 6 shows a block diagram schematically illustrating a data processing apparatus according to several examples of the present disclosure.

### DETAILED DESCRIPTION

According to several examples of the present disclosure, it is proposed to add an additional layer or element of protection for an application within a TEE (or enclave as may be referred to in the following) with respect to hardening it against reverse-engineering. In order to achieve this, the input and output interfaces of the TEE may be equipped with additional "protection modules", depending on, for example, the application's protection needs and individual characteristics influencing reverse-engineering risk. Such protection modules can vary, for instance, from simple modules performing a rate-limiting of inputs to be processed over filters allowing only a specific range of values or being semantics-specific, up to more sophisticated modules "fuzzifying" outputs or expecting remote attestation proofs of the input provider's data sender's maximum data frequency. This may significantly raise the bar for reverse-engineering, and in turn may significantly increase trust with the application provider to allow execution on untrusted devices or application integration with third party partners.

In more detail, according to several examples of the present disclosure, the proposed solution may add an additional layer or element of protection for an application within a TEE with respect to hardening the application against reverse-engineering. This is needed, as hardware support for confidential computing protects direct access to the runtime of the TEE as well as to the associated memory from attackers, i.e., code and intermediate results are kept confidential. On the other hand, there are no guarantees given on how the TEE is used by the application user, for example, how often inputs are allowed to be sent (to the application for example), which inputs are allowed to be sent (to the application for example), or from which source inputs should be sent (to the application for example). As a result, an attacker might try to feed a huge number or all reasonable inputs to the algorithm and/or model used by/included in the application and collect a huge amount of output information from it, based on which statistical reverse engineering of the algorithm or model used in the application or the protected TEE could be done, for instance.

Therefore, according to several examples of the present disclosure, it is disclosed to equip the input and/or output interfaces of the TEE with additional "protection modules", depending on the application's individual additional protection needs and individual characteristics influencing reverse-engineering risk. This raises the bar for reverse-engineering an application within a TEE significantly, compared to simply using a hardware-based TEE as is. Technically, it needs to be ensured that (ideally all) inputs go through the "input protection modules" as well as that (ideally all) outputs are processed by the "output protection modules". It shall be noted that these additional processing steps might influence the performance of the application, for example, introduce additional latency or jitter, which might limit applicability especially for application with tight and strict timing guarantees. Most applications, however, are expected to tolerate such minor performance influences without having any impact to the "normal" application behavior.

According to several examples of the present disclosure, there are various examples for protection modules that might be applied for additional reverse engineering protection, some of them are listed and briefly explained in the following. Depending on the application's individual protection needs and characteristics, one or many might be applied, either as input or output or both ends. Which modules are applied for which application may be subject to pre-configuring the TEE with the respective protection modules.

Examples for "input protection modules":
- Input rate limiting: allowing only a specific amount of data per time interval to be sent to the TEE and processed by the algorithm. This slows down an attacker trying to feed all reasonable inputs and collecting large amounts of output information within a short time period.
- Input range limiting: allowing only specific ranges of inputs to be sent to the TEE and processed by the algorithm. This prevents the attacker from trying the entire input range, limiting information to reasonable value ranges only. Additionally, this might avoid unwanted outputs or algorithm behavior due to inputs being outside of considered valid ranges.

- Verification of source: allowing inputs only from specific sources, e.g., IP addresses, users, machines, or even another attested TEE. The verification may rely on shared secrets, tokens, certificates, or even make use of advanced techniques such as remote attestation.
- Verification of input frequency: allowing only a pre-specified input frequency, i.e., defining a threshold how many inputs are allowed per time-interval. The frequency limit can be applied per source, if verification of source is available (see above), or globally for inputs from all sources.
- Encoding semantics filter: filtering known sensitive input combinations before feeding them into the algorithm. Such input combinations might, for instance, be known to provide very specific insights into the model or algorithm or even able to extract sensitive model features or parameters.
- Input value blocker: there might be specific inputs that might raise errors or lead to unanticipated or uncontrolled behavior of the algorithms. Such input values need to be blocked from reaching the algorithm or model, to avoid unwanted malfunctioning or data leakage.

Examples for "output protection modules":
- Output rate limiting or output range limiting: similar to the input protection modules, rate or range of output values might be limited to a specific time interval or value range, to avoid extensive information gain by just observing results with a huge number of input combinations.
- Fuzzifying outputs: instead of providing precise output values for a specific input combination, the algorithm or model could provide "fuzzy outputs", e.g., in the sense of being randomized within an acceptable value range around the specific value, or by adding some noise to the specific value. Such noise or randomization could also depend on other factors, such as input data rates (high rate, higher fuzziness).

The challenge with such an approach is that, in case the receiver of the results doesn't know the results are fuzzified or to which extent they are fuzzified, this might also impact benign use of the protected algorithm or model negatively.
- Output encryption: the output is encrypted in a way that only the legitimate user of the application is able to decrypt and make sense of the output. This significantly limits the attack surface, as the attacker first needs to get access to the decryption key to launch a reverse-engineering attack, e.g., by stealing the decryption key from a legitimate user or being the legitimate user. Both symmetric-key or public-key encryption schemes could be used. Keys for the legitimate user may be fixed and negotiated beforehand or are modifiable at runtime and require authorization by another party, e.g., via signatures.

Furthermore, according to several examples of the present disclosure, the protection modules may also be extended to protect sensitive inputs from being leaked by a model. This may be necessary, as an adversary could be interested in sensitive data that is transmitted encrypted to the model. In case the adversary has access to the output of the application within the TEE and/or to the output of the TEE and the output leaks information about the input, the adversary has gained important knowledge, to which he shouldn't have access. An attacker could also attempt to modify or replace a benign model in a way that it starts leaking input data. Such manipulations on the model may even be performed in a hidden, i.e., steganographic, way so that leaked data in the output is only understandable by the adversary but unnoticeable by others. Examples for protection modules against these attacks include:
- Verification of source: the source of the model should be verifiable, for example, by digital signatures and remote attestation. In addition, only legitimate applications providers should be able to modify the model after deployment.
- Detection and prevention of steganographic attacks: Make use of steganalysis to detect hidden leakage of inputs in outputs. Block operation if attack is detected.
- Prevention and detection of reversible computations: Establish framework that by design prevents models from leaking data, e.g., by restricting the capabilities and computations a model is able to perform. An alternative approach is to analyze models and detect whether their computations can be made reversible, i.e., an attacker can learn about inputs from outputs, and block such models.

- Fuzzifying outputs, as already indicated above.
- Output encryption, as already indicated above.

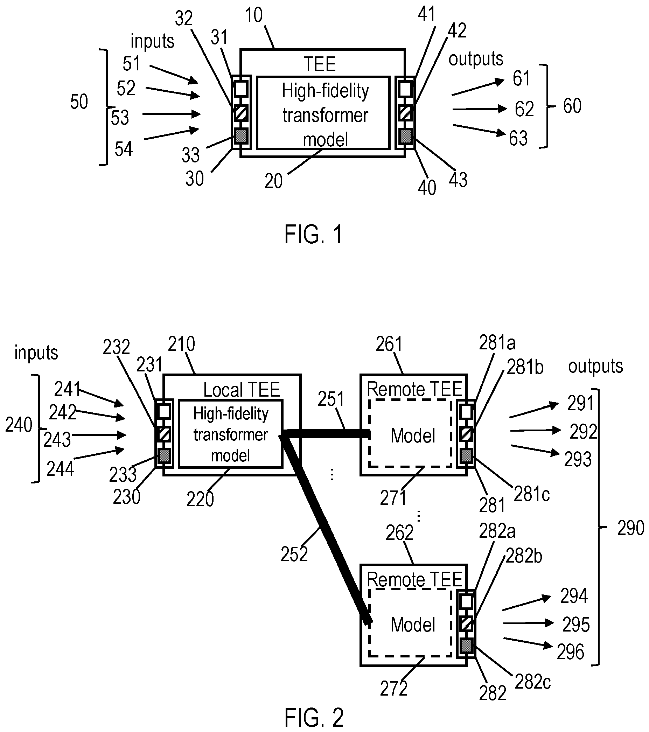

Referring now to Figure 1, Figure 1 illustrates, according to several examples of the present disclosure, a schematic drawing of an application 20, i.e. a high-fidelity transformer model as named in Figure 1 as an example, protected by a TEE 10 plus additional protection modules or input protection modules 31, 32, 33 at an input interface 30 and plus additional protection modules or output protection modules 41, 42, 43 at an output interface 40 to further harden against reverse-engineering. Input data 50 are indicated to be input into the TEE 10, and output data 60 are indicated to be output from the TEE 10. The input data 50 are indicated to comprise different data streams or pieces of data 51, 52, 53 and 54. The output data 60 are indicated to comprise different data streams or pieces of data 61, 62 and 63.

As illustrated in Figure 1, the input data 50 enter the TEE 10 via the input interface 30 and, in doing so, go through one or more of the input protection modules 31, 32 and 33. Each of the different input data elements 51 to 54 may go through different protection modules of the shown input protection modules 31 to 33. Not all input protection modules may be used. The number of input protection modules may be different from three and may be at least one. A number of input data elements may be different from four and may be at least one. Input data 50 that went through the input interface 30 and the input protection modules 31 to 33 may enter, i.e. may be input to the application 20. It shall be noted that a number of input data elements may be different from a number of data elements actually reaching or being input into the application 20. For example, at the input protection modules 31 to 33, several input data elements may be combined or processed into one data element and/or one input data element may be divided or processed into several data elements.

As further illustrated in Figure 1, the output data 60 leave the TEE 10 via the output interface 40 and, in doing so, go through one or more of the output protection modules 41, 42 and 43. Each of the different output data elements 61 to 63 may go through different protection modules of the shown output protection modules 41 to 43. Not all output protection modules may be used. The number of output protection modules may be different from three and may be at least one. The number of output protection modules may be different from the number of input protection modules. A number of output data elements may be different from three and may be at least one. Output data 60 that went through the output interface 40 and the output protection modules 41 to 43 may be data output from the application 20. It shall be noted that a number of output data elements may be different from a number of data elements actually output from the application 20. For example, at the output protection modules 41 to 43, several data elements output form the application 20 may be combined or processed into one output data element and/or one data element output from the application 20 may be divided or processed into several output data elements.

The TEE 10 may have several input interfaces. The TEE 10 may have several output interfaces. The TEE 10 may comprise several applications.

The input data 51 to 54 may comprise different types of data and information. For example, at least part of the input data 51 to 54 may comprise numerical values, which may be input into calculation algorithms or calculation models of the application 20 (i.e. used by the application 20). Further, at least part of the input data 51 to 54 may comprise graphical information, upon which the application 20 may perform image processing or object identification for example. Moreover, at least part of the input data 51 to 54 may comprise text or textual information, upon which the application 20 may perform text recognition processes for example.

Similar, the output data 61 to 63 may comprise different types of data and information.

Referring now to Figure 2, Figure 2 illustrates a schematic drawing of an application protected by multiple TEEs plus additional protection modules at an input interface of a local TEE and at an output interface of a remote TEE to further harden against reverse-engineering according to several examples of the present disclosure.

In particular, Figure 2 differs from Figure 1 in that the TEE 10 according to Figure 1 is replaced by multiple TEEs 210, 261 and 262. The TEE 210 represents a local TEE 210, wherein the TEEs 261 and 262 represent remote TEEs 261 and 262. There may be more than two remote TEEs, as indicated in Figure 2. Input data 240 comprising several pieces of input data 241, 242, 243 and 244 for example goes through the input interface 230 and one or more of the input protection modules 231, 232 and 233. The input data 240 may go through the input interface 230 first and then through at least one of the input protection modules 231, 232 and 233, i.e., the input protection modules 231, 232 and 233 may be provided behind the interface 230 and at the TEE 210 (for example within the TEE 210). The input data 240 may go through at least one of the input protection modules 231, 232 and 233 first and then through the input interface 230, i.e., the input protection modules 231, 232 and 233 may be provided before the interface 230 and at the TEE 210 (for example outside the TEE 210 like a wrapper). The input data 240 may go through the input interface 230 and at least one of the input protection modules 231, 232 and 233 at the same time, for example in case the input interface 230 is equipped with the input protection modules 231, 232 and 233. According to several examples of the present disclosure, there may be one or more protection modules before, at and/or behind a respective interface.

The local TEE 210 is connected with each of the remote TEEs 261 and 262 by respective communications channels 251 and 252. The local TEE 210 may be connected to a remote TEE by more than one communication channel. A remote TEE may comprise a separate application or model 271, 272. However, such separate application or model 271, 272 may be part of the application or model 220 provided within the local TEE 210. Further, instead of connecting between TEEs, the communication channels 251 and 252 may connect between the applications or application parts provided inside the respective TEEs. There may be one or more protection modules provided between a local TEE and a remote TEE. Thus, for example, data sent via the communication channel 251 goes through one or more protection modules. Each TEE of the multiple TEEs as shown in Figure 2 may be equipped or provided with different types and/or amounts of protection modules.

Output data 290 may be obtained from one or more of the TEEs. For example, as indicated in Figure 2, pieces of output data 291, 292 and 293 are obtained from the Remote TEE 261, wherein pieces of output data 294, 295 and 296 are obtained from the Remote TEE 262. In view thereof, Figure 2 further differs from Figure 1 in that the output data 290 comprising the several pieces of output data 291 to 296, for example, goes through the output interfaces 281 and 282 and one or more of the respective output protection modules 281a, 281b, 281c and 282a, 282b, 282c. The output data 290 may go through the output interfaces 281 and/or 282 first and then through at least one of the output protection modules 281a, 281b, 281c and 282a, 282b, 282c, i.e., the output protection modules 281a, 281b, 281c and 282a, 282b, 282c may be provided behind the output interfaces 281 and 282 and at the respective TEEs 261 and 262 (for example outside the TEEs 261 and 262 like wrappers). The output data 290 may go through at least one of the output protection modules 281a, 281b, 281c and 282a, 282b, 282c first and then through the output interfaces 281 and/or 282, i.e., the output protection modules 281a, 281b, 281c and 282a, 282b, 282c may be provided before the output interfaces 281 and 282 and at the TEEs 261 and 262 (for example within the respective TEEs 261 and 262). The output data 290 may go through the output interfaces 281 and/or 282 and at least one of the output protection modules 281a, 281b, 281c and 282a, 282b, 282c at the same time, for example in case the output interfaces 281 and 282 are equipped with the output protection modules 281a, 281b, 281c and 282a, 282b, 282c. According to several examples of the present disclosure, there may be one or more protection modules before, at and/or behind a respective interface.

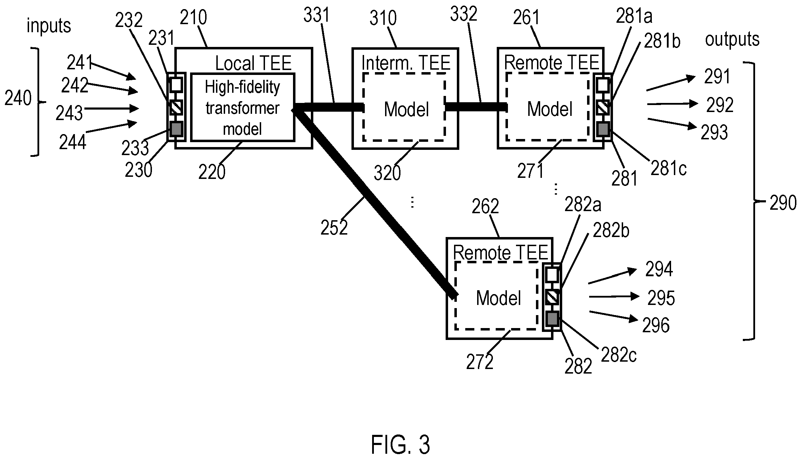

Referring now to Figure 3, Figure 3 illustrates based on Figure 2 a schematic drawing showing the application of multiple TEEs, according to several examples of the present disclosure.

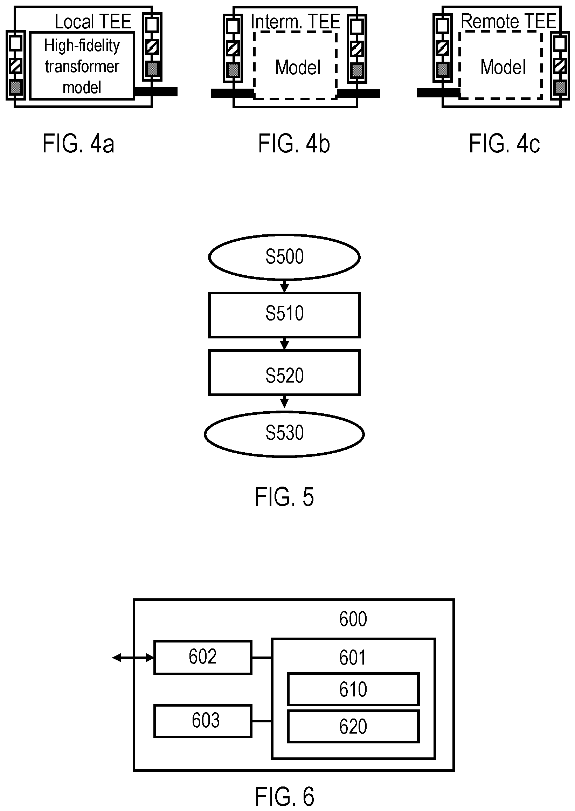

In particular, Figure 3 differs from Figure 2 in that an intermediate TEE 310 comprising a model 320 is provided between the local TEE 210 and the Remote TEE 261, via communication channels 331 and 332. For reasons of comprehensibility, Figures 4a, 4b and 4c schematically illustrate the three types of TEEs shown in Figure 3, i.e. a Local TEE 210 (Figure 4a), an Intermediate TEE 310 (Figure 4b) and a Remote TEE 261 (Figure 4c).

According to Figure 3, the Local TEE 210 has one or more input protection modules 231, 232, 233. Furthermore, the Local TEE 210 may further have one or more output protection modules and/or further has one or more (output) communication channels 252 and 331. The Intermediate TEE 310 has one or more input communication channels 331 and may have zero or more input protection modules. The Intermediate TEE 310 further has one or more output communication channels 332 and may further have zero or more output protection modules. The Remote TEE 261 (or 262) has one or more (input) communication channels 332 (252) and may have one or more input protection modules. The Remote TEE 261 (or 262) further has one or more output protection modules 281a, 281b, 281c (282a, 282b, 282c).

Regarding Intermediate TEEs, it shall be noted that similar to Remote TEEs, there can be zero or more intermediate TEEs which can be connected either in a chain one after the other or in a fanout manner, such that multiple local or intermediate TEEs can be connected to one (i.e., chain) or more (i.e., fanout) intermediate TEEs.

Independent from the illustration as shown in Figure 3, it shall be noted that according to several examples of the present disclosure, in general, a Local TEE and/or a Remote TEE may have no protection modules, for example if subsequent TEEs (or corresponding interfaces of these subsequent TEEs) are provided with protection modules.

Thus, according to several examples of the present disclosure, it may be said that a TEE comprises: ≥ 1 inputs, ≥ 1 outputs, ≥ 0 input protection modules, ≥ 0 output protection module. Moreover, TEEs can be realized locally or remotely and they can be interconnected in an arbitrary manner.

Referring now to Figure 5, Figure 5 illustrates a flowchart indicative of a method according to several examples of the present disclosure. The method is a method for protecting an application within a TEE against reverse-engineering in industrial plants, wherein the application may be such application 20 as outlined above with reference to Figure 1 or wherein the application may be understood as one or more of such applications 220, 271 and 272 as outlined above with reference to Figure 2 or wherein the application may be understood as one or more of such applications 220, 271, 272 and 320 as outlined above with reference to Figure 3. The TEE may be such TEE 10 as outlined above with reference to Figure 1 or wherein the TEE may be understood as one or more of such TEEs 210, 261 and 262 as outlined above with reference to Figure 2 or wherein the TEE may be understood as one or more of such TEEs 210, 261, 262 and 310 as outlined above with reference to Figure 3.

The method starts in S500.

In S510, the method comprises equipping the TEE or an interface of the TEE with at least one protection module.

In S520, the method comprises directing data related to the application to go through a protection module of the at least one protection module.

The method ends in S530.

Referring now to Figure 6, Figure 6 shows a block diagram schematically illustrating a data processing apparatus 600 according to several examples of the present disclosure. In particular, according to several examples of the present disclosure, there is provided a data processing apparatus 600 for protecting an application within a TEE against reverse-engineering in industrial plants. The data processing apparatus 600 comprises a processor 601 being configured to carry out the method of Figure 5.

In more detail, according to various examples, a data processing apparatus 600 being configured to carry out the method of Figure 5 may comprise a processing circuitry, a processing function, a processing means, a processing unit or a processor 601, which enables the data processing apparatus 600 to participate in protecting an application within a TEE against reverse-engineering in industrial plants. The processor 601 may comprise one or more processing portions or functions, wherein the processing portions or functions may be provided as one or more physical or virtual entities. The data processing apparatus 600 may comprise one or more communication interfaces 602. The data processing apparatus 600 may further comprise a memory or memory unit 603 for storing data, programs and/or instructions to be executed by the processor. The memory 603 may be a memory internal to the data processing apparatus 600 or may be a memory external to the data processing apparatus 600, for example at a cloud server. The processor 601 may comprise one or more portions, which enable the data processing apparatus 600 to execute the method of Figure 5 for example. According to several examples of the present disclosure, an equipping portion 610 may be configured to perform such equipping according to S510 of Figure 5, and a directing portion 620 may be configured to perform such directing according to S520 of Figure 5.

According to several examples of the present disclosure, the respective portions of the data processing apparatus 600 may also be understood as means for carrying out the certain function.

According to several examples of the present disclosure, there is provided a data processing system for protecting an application within a TEE against reverse-engineering in industrial plants. The data processing system comprises the data processing apparatus 600 according to Figure 6 and/or comprises means for carrying out the method according to Figure 5.

According to several examples of the present disclosure, there is provided an industrial plant comprising the data processing apparatus 600 according to Figure 6 and/or the data processing system as outlined above.

According to several examples of the present disclosure, there is provided a computer-readable medium comprising instructions which, when executed by a computing system, causes the computing system to perform the method according to Figure 5. The computer-readable medium may be transitory or non-transitory, volatile or non-volatile.

According to several examples of the present disclosure, there is provided a computer program product comprising instructions which, when executed by a computing system, enable or cause the computing system to perform the method according to Figure 5. The computer program product may comprise a computer-readable medium comprising instructions of the computer program product. The computer-readable medium as mentioned above may have stored thereon the computer program product.

According to several examples of the present disclosure, there is provided a use of the data processing apparatus 600, the data processing system as outlined above, the industrial plant as outlined above, the computer-readable medium as outlined above and/or the computer program product as outlined above.

The method according to Figure 5 may be at least in parts computer implemented.

Optional features of the method according to Figure 5 may form part of the data processing apparatus 600, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for protecting an application (20; 220, 271, 272, 320) within a trusted execution environment, TEE, (10; 210, 261, 262, 310) against reverse-engineering in industrial plants, the method comprising:
equipping (S210) the TEE (10; 210, 261, 262, 310) or an interface (30; 40; 230; 281; 282) of the TEE (10; 210, 261, 262, 310) with at least one protection module (31, 32, 33; 41, 42, 43; 231, 232, 233; 281a, 281b, 281c; 282a, 282b, 282c); and
directing (S220) data (50; 60; 240; 290) related to the application (20; 220, 271, 272, 320) to go through a protection module of the at least one protection module (31, 32, 33; 41, 42, 43; 231, 232, 233; 281a, 281b, 281c; 282a, 282b, 282c).

2. The method according to claim 1,
wherein the interface (30; 40; 230; 281; 282) comprises an input interface (30; 230), the at least one protection module (31, 32, 33; 41, 42, 43; 231, 232, 233; 281a, 281b, 281c; 282a, 282b, 282c) comprises one or more input protection modules (31, 32, 33; 231, 232, 233) and the data (50; 60; 240; 290) comprise input data (51, 52, 53, 54; 241, 242, 243, 244);
wherein the equipping comprises equipping the TEE (10; 210, 261, 262, 310) or the input interface (30; 230) of the TEE (10; 210, 261, 262, 310) with the one or more input protection modules (31, 32, 33; 231, 232, 233); and
wherein the directing comprises directing the input data (51, 52, 53, 54; 241, 242, 243, 244) to go through at least one input protection module of the one or more input protection modules (31, 32, 33; 231, 232, 233) before going into the application (20; 220, 271, 272, 320).

3. The method according to claim 1 or 2,
wherein the interface (30; 40; 230; 281; 282) comprises an output interface (40; 281; 282), the at least one protection module (31, 32, 33; 41, 42, 43; 231, 232, 233; 281a, 281b, 281c; 282a, 282b, 282c) comprises one or more output protection modules (41, 42, 43; 281a, 281b, 281c; 282a, 282b, 282c) and the data (50; 60; 240; 290) comprise output data (61, 62, 63; 291, 292, 293);
wherein the equipping comprises equipping the TEE (10; 210, 261, 262, 310) or the output interface (40; 281; 282) of the TEE (10; 210, 261, 262, 310) with the one or more output protection modules (41, 42, 43; 281a, 281b, 281c; 282a, 282b, 282c); and
wherein the directing comprises directing the output data (61, 62, 63; 291, 292, 293) from the application (20; 220, 271, 272, 320) to be processed by at least one output protection module of the one or more output protection modules (41, 42, 43; 281a, 281b, 281c; 282a, 282b, 282c) before going out of the TEE (10; 210, 261, 262, 310), and/or wherein the directing comprises directing the output data (61, 62, 63; 291, 292, 293) from the application (20; 220, 271, 272, 320) to go out of the TEE (10; 210, 261, 262, 310) via at least one output protection module of the one or more output protection modules (41, 42, 43; 281a, 281b, 281c; 282a, 282b, 282c) provided behind the TEE (10; 210, 261, 262, 310) and the output data to be processed by the at least one output protection module provided behind the TEE (10; 210, 261, 262, 310).

4. The method according to any of claims 1 to 3,
wherein the equipping comprises equipping the TEE (10; 210, 261, 262, 310) or the interface (30; 40; 230; 281; 282) of the TEE (10; 210, 261, 262, 310) with one or more protection modules (31, 32, 33; 41, 42, 43; 231, 232, 233; 281a, 281b, 281c; 282a, 282b, 282c);
wherein the method further comprises applying at least one protection module from the one or more protection modules (31, 32, 33; 41, 42, 43; 231, 232, 233; 281a, 281b, 281c; 282a, 282b, 282c) for the application (20; 220, 271, 272, 320);
and
wherein the directing comprises directing the data (50; 60; 240; 290) related to the application (20; 220, 271, 272, 320) to go through the applied at least one protection module.

5. The method according to any of claims 1 to 4, further comprising
configuring the TEE (10; 210, 261, 262, 310) with the one or more protection modules (31, 32, 33; 41, 42, 43; 231, 232, 233; 281a, 281b, 281c; 282a, 282b, 282c); and
based on a result of the configuring, applying at least one protection module from the one or more protection modules (31, 32, 33; 41, 42, 43; 231, 232, 233; 281a, 281b, 281c; 282a, 282b, 282c) for the application (20; 220, 271, 272, 320);
wherein the directing comprises directing the data (50; 60; 240; 290) related to the application (20; 220, 271, 272, 320) to go through the applied at least one protection module.

6. The method according to claim 4 or 5, wherein the applying comprises
applying for the application (20; 220, 271, 272, 320) at least one of the following protection modules:
verification of source,
detection and prevention of steganographic attacks,
prevention and detection of reversible computations,
fuzzifying outputs, and
output encryption; and
wherein the method further comprises restricting leakage of one or more pieces of the input data (51, 52, 53, 54; 241, 242, 243, 244) based on the applied at least one of the following protection modules.

7. The method according to any of claims 1 to 6, wherein the input protection module (31, 32, 33; 231, 232, 233) is at least one of:
input rate limiting,
input range limiting,
verification of source,
verification of input frequency,
encoding semantic filters, and
input value blocker.

8. The method according to any of claims 1 to 7, wherein the output protection module (41, 42, 43; 281a, 281b, 281c; 282a, 282b, 282c) is at least one of:
output rate limiting,
output range limiting,
fuzzifying outputs, and
output encryption.

9. The method according to any of claims 1 to 8, wherein the TEE (10; 210, 261, 262, 310) comprises multiple TEEs, wherein the multiple TEEs comprise a local TEE (210) and one or more remote TEEs (281; 282), wherein the local TEE (210) is connected to the one or more remote TEEs (281; 282) by one or more communication channels (251; 252), respectively.

10. The method according to claim 9, wherein the equipping comprises equipping the local TEE (210) or an interface (230) of the local TEE (210) with the at least one protection module (231, 232, 233), and/or wherein the equipping comprises equipping the one or more remote TEEs (281; 282) or one or more interfaces (281; 282) of the one or more remote TEEs (281; 282) with the at least one protection module (281a, 281b, 281c; 282a, 282b, 282c),
wherein the interface (230) of the local TEE (210) comprises an input interface and/or an output interface of the local TEE (210),
wherein the one or more interfaces (281; 282) of the one or more remote TEEs (281; 282) comprise one or more input interfaces and/or one or more output interfaces of the one or more remote TEEs (281; 282).

11. The method according to claim 9 or 10, wherein the application (20; 220, 271, 272, 310) comprises one or more application parts (220, 271, 272, 310) provided at one or more TEEs of the multiple TEEs.

12. A data processing apparatus (600) for protecting an application (20; 220, 271, 272, 320) within a TEE (10; 210, 261, 262, 310) against reverse-engineering in industrial plants, the data processing apparatus (600) comprising a processor (601) being configured to carry out the method of any of claims 1 to 11.

13. A data processing system for protecting an application within a TEE (10; 210, 261, 262, 310) against reverse-engineering in industrial plants, the data processing system comprising the data processing apparatus (600) according to claim 12.

14. A computer-readable medium comprising instructions which, when executed by a computing system, cause the computing system to perform the method of any of claims 1 to 11.

15. A computer program product comprising instructions which, when executed by a computing system, enable and/or cause the computing system to perform the method of any of claims 1 to 11.
